# EUROPEAN PATENT APPLICATION

(11) **EP 4 064 065 A1**
(43) Date of publication of application: **28.09.2022**
(21) Application number: 21164187.3
(22) Date of filing: 23.03.2021
(51) Int. Cl.: G06F 16/23

(54) **DATA RETENTION IN A DECENTRALIZED DISTRIBUTED DATABASE**

(71) Applicant: Siemens Aktiengesellschaft, 80333 München (DE)
(72) Inventor: Singh, Saurabh Narayan, 81739 München (DE); Zupan, Nejc, 80337 München (DE)

(57) **Abstract**

The invention relates to a computer-implemented method and a data retention system for data retention in a decentralized distributed database. The method comprises the steps: receiving (S1) datasets, wherein a data type is assigned to each dataset, receiving (S2) at least one predefined data retention rule, wherein the data retention rule comprises at least one condition for retaining or deleting a data block, sorting and linking together (S3) the datasets depending on the respective assigned data type, storing (S4) datasets of the same data type into separate data blocks in the decentralized distributed database, wherein each data block comprises metadata based on the data type of the therein stored datasets, checking (S5) the metadata of a respective block against the data retention rule and outputting a check result, and retaining (S6a) or deleting (S6b) the respective data block depending on the check result. The invention enables the data deletion maintaining the security, verification and immutability of the distributed database. The management of huge data volumes is improved, reducing the need for large computing and storage resources. Hence, this invention also enables running a blockchain on devices with lower resources, e.g. IoT devices.

## Description

The present invention relates to a computer-implemented method and a system for data retention in a decentralized distributed database, as well as a computer program product for performing the method steps.

A blockchain, i.e. a decentralized distributed database, is an ever-growing ledger of transactions. Every transaction ever added to the blockchain remains part of the ledger. This provides the promises of immutability and security to the blockchain and differentiates it from a standard database.

The update operation in blockchain allows for updating/changing a state and creates a new transaction which is added on top of previous transaction. This can lead to significant storage issues and computing requirements, as when the network size grows, the data access time also increases. A new node that joins the blockchain network is typically required to download this large dataset before it can actively participate in the network. For most use cases, such approach is not preferable and can hinder the acceptability of blockchain as a standard. For many use cases, data do not need to be unlimitedly stored and could later be deleted or changed. Similarly, there are use cases involving for example IoT devices with a constant relay of data. This data needs to be persisted on the blockchain for certain cycles before the next dataset takes over and the existing data becomes irrelevant. There are also use cases with an agreement around the number of transactions or size of dataset beyond which the older data can be deleted as it is not required anymore. However, data deletion is not possible in the current solutions for decentralized distributed databases without altering the security, verification and immutability guarantees.

It is therefore an objective of the present invention to enable data retention management for a decentralized distributed database, such as a blockchain or a distributed ledger.

The object is solved by the features of the independent claims. The dependent claims contain further developments of the invention.

The invention provides according to the first aspect a computer-implemented method for data retention in a decentralized distributed database, comprising the steps:
- receiving datasets, wherein a data type is assigned to each dataset,
- receiving at least one predefined data retention rule, wherein the data retention rule comprises at least one condition for retaining or deleting a data block,
- sorting and linking together the datasets depending on the respective assigned data type,
- storing datasets of the same data type into separate data blocks in the decentralized distributed database, wherein each data block comprises metadata based on the data type of the therein stored datasets,
- checking the metadata of a respective block against the data retention rule and outputting a check result,
   and
- retaining or deleting the respective data block depending on the check result.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors and other electronic devices for data processing.

Within the context of embodiments of the invention, "computer-implemented" can be understood to mean for example an implementation of the method in which in particular a processor carries out at least one method step of the method.

Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can also be understood to mean a virtualized processor, a virtual machine or a soft CPU.

Within the context of embodiments of the invention, "assign", in particular in regard to data and/or information, can be understood to mean for example computer-aided assignment of data and/or information.

Within the context of embodiments of the invention, "provide", in particular in regard to data and/or information, can be understood to mean for example computer-aided provision. Provision is effected for example via an interface (e.g. a database interface, a network interface, an interface to a memory unit). This interface can be used for example to convey and/or send and/or retrieve and/or receive applicable data and/or information during the provision.

Within the context of embodiments of the invention, a "checksum" can be understood to mean for example a cryptographic checksum or cryptographic hash or hash value, which are formed or calculated, in particular by means of a cryptographic hash function, for a data record and/or data and/or one or more of the transactions and/or a subregion of a data block (e.g. the block header of a block of a blockchain or data block header of a data block of the distributed database system or only some of the transactions of a data block). A checksum can be in particular a checksum/s or hash value/s of a hash tree (e.g. Merkle tree, Patricia tree).

Within the context of embodiments of the invention, "concatenation of (the) data blocks of a distributed database system" can be understood to mean for example that data blocks each comprise information (e.g. concatenation checksum) referring to or referencing another data block or multiple other data blocks of the distributed database system.

Within the context of embodiments of the invention, "insertion into the distributed database system" and the like can be understood to mean for example that, in particular, a transaction or the transactions or a data block with its transactions is conveyed to one or more nodes of a distributed database system. If these transactions are for example validated successfully (e.g. by the node/s), these transactions are in particular concatenated as a new data block with at least one existing data block of the distributed database system. For this purpose, the applicable transactions together with the checksum/hash of the previous block are stored for example in a new data block. In particular, this validation and/or concatenation can be performed by a trusted node (e.g. a mining node, a blockchain oracle or a blockchain platform).

Within the context of embodiments of the invention, "transaction" or "transactions" can be understood to mean for example a smart contract, a data structure or a dataset or a transaction data record. Within the context of embodiments of the invention, "transaction" or "transactions" can also be understood to mean for example the data of a transaction of a data block of a blockchain. A transaction can in particular comprise a program code that provides a smart contract, for example. Alternatively, a transaction can, by way of example, be a data structure that stores data (e.g. the control instructions). A transaction can, by way of example, also be referred to as a message (that is to say a communication message storing data) or can be a message that e.g. stores applicable data (e.g. control instructions).

Within the context of embodiments of the invention, a "program code" (e.g. a smart contract) can be understood to mean for example a program instruction or multiple program instructions, in particular stored in one or more transactions. The program code is in particular executable and is executed by the distributed database system, for example. The program code is preferably executed by the infrastructure of the distributed database system. This involves for example a virtual machine being realized by the infrastructure of the distributed database system.

Within the context of embodiments of the invention, a "smart contract" can be understood to mean for example an executable program code (see in particular the "program code" definition). The smart contract is preferably stored in a transaction of a distributed database system (e.g. a blockchain), for example in a data block of the distributed database system. By way of example, the smart contract can be executed in the same way as explained in the definition of "program code", in particular within the context of embodiments of the invention.

Within the context of embodiments of the invention, a "decentralized distributed database (system)", which, by way of example, can also be referred to as a distributed database, can be understood to mean for example a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database. It is also possible, by way of example, for different consensus methods (consensus algorithms) to be implemented. These can be for example a consensus method by means of a cryptographic puzzle, gossip about gossip, virtual voting or a combination of the methods (e.g. gossip about gossip in combination with virtual voting).

Within the context of embodiments of the invention, "data block", which, can be understood to mean for example a data block of a distributed database system (e.g. a blockchain or a peer-to-peer database) that is, in particular, implemented as a data structure and preferably in each case comprises one of the transactions or several of the transactions. A data block can comprise details pertaining to the size (data size in bytes) of the data block, a data block header (block header), a transaction counter and one or more transactions, for example.

A data block can comprise metadata, wherein metadata can be understood as a block header, for example. The metadata/the data block header can comprise a checksum/hash value of the previous/preceding data block, a pointer/reference to the previous/preceding data block, an information about a data type of the therein stored data, and a time definition of the block's lifetime/storage time defining the time span the block shall be stored in the distributed database.

In particular, the hash for every block is calculated using a hash function performed on data of said data block, wherein the data comprise new data/transactions and the hash (value) of the previous data block. Therefore, even when a data block is deleted from the database/chain, its hash remains part of the chain, as it is stored in the header/metadata of the subsequent data block. This way, in case of future disputes, the involved stakeholders can bring in the data and based on hash it can be checked whether the proposed data was actually part of database.

Within the context of embodiments of the invention, "preceding data blocks of a (specific) data block of the distributed database system" can be understood to mean for example the data block of the distributed database system that in particular directly precedes a (specific) data block. Alternatively, "preceding data blocks of a (specific) data block of the distributed database system" can, in particular, also be understood to mean all data blocks of the distributed database system that precede the specific data block. As a result, a checksum can, in particular, be formed only from the data block (or the transactions thereof) directly preceding the specific data block or from all data blocks (or the transactions thereof) preceding the first data block, for example.

Within the context of embodiments of the invention, a "blockchain node", "node", "node of a distributed database system" and the like can be understood to mean for example devices (e.g. field devices), computers, smartphones, clients or subscribers that perform operations for (with) the distributed database system (e.g. a blockchain). Such nodes can, by way of example, execute transactions of a distributed database system or the data blocks thereof or insert or concatenate new data blocks with new transactions into the distributed database system by means of new data blocks.

Within the context of embodiments of the invention, a "data retention rule" can be understood to mean a rule, policy, technical code, condition, provision, or requirement for data/transactions. The rata retention rule specifies whether data can be deleted from or need to be retained in the distributed database. Furthermore, a data retention rule can specify the order in which data blocks are deleted. Furthermore, a data retention rule can specify a time when a data block can be deleted. It can further specify a condition which must be fulfilled for deleting a data block.

Datasets, which in the following can be also referred to as transactions, can be grouped together and further deleted depending on their data type.

It is an advantage of the present invention that it defines a data retention protocol enabling the data deletion from the distributed database maintaining the security, verification and immutability of the distributed database. The management of huge data volumes/the data size of the database is improved, reducing the need for large computing and storage resources. Hence, this method also enables running a distributed database, e.g. a blockchain, on devices with lower resources, e.g. IoT devices, edge devices or gateways.

According to a preferred embodiment, the data type can be one of the following:
- a first data type defining a dataset which has unlimited storage time,
- a second data type defining a dataset which is assigned to a specific use case, wherein a use case specific condition for data retention is assigned to the use case,
   or
- a third data type defining a dataset which has a predefined storage time.

A data type can for example be understood as an annotation to a data structure of a dataset. Using the data type enables clustering of the datasets for subsequent data retention management.

According to a preferred embodiment, the metadata can comprise a block storage time depending on the data type of datasets stored in the respective data block.

Preferably, the metadata can be stored in a block header of a data block. Due to grouping of the datasets according to their respective data type, a respective block preferably comprises a block storage time which is deduced from the data type. For example, the data block storage time of the first data type can be unlimited, for the second data type can be dependent on a use-case specific condition, or for the third data type an average storage time of all therein stored datasets of the third data type. The metadata therefore provide information about the data block, which is required for the data retention management.

According to a further embodiment, a data type of a dataset and/or the metadata of a data block can be defined by a program code generating the dataset.

Preferably, the data type is specified when generating a dataset/transaction, i.e., when executing a smart contract. For example, a smart contract implementing a use case can have an annotation defining the maximum/mean/minimum storage time of the respective dataset of the use case and/or a condition for data retention.

According to a further embodiment datasets of the third data type can be further sorted, linked together and stored into a data block depending on their storage time, wherein their average storage time is stored as the data block storage time for this data block.

Preferably, only datasets with a required storage time within a given error margin are grouped together. This enables efficient clustering and subsequent deletion of the datasets.

According to a further embodiment, datasets of the third data type can be further sorted, linked together and stored into a data block by means of a clustering algorithm or by means of a machine learning algorithm.

A clustering algorithm can be for example k-means clustering, expectation-maximization clustering or a partitioning algorithm, further improving the efficiency of data retention management.

According to a further embodiment, a data block of datasets of the first data type can be indefinitely retained in the decentralized distributed database.

By sorting data sets by their data type, data sets which shall not be deleted can be grouped into data blocks which are unlimitedly stored in the distributed database.

According to a preferred embodiment, a data block of datasets of the second data type can be deleted depending on the respective data block storage time and/or depending on the respective use-case specific condition.

A use-case can for example be understood to mean a project, an application or a process performed via the distributed database wherein only part of the nodes of the distributed database participate and/or wherein generated data/transactions are only linked to said use-case.

A use-case specific condition can for example be a finishing date of the use-case, e.g., defining the time when data can be deleted. Furthermore, a use-case specific condition can for example comprise voting requirement for data deletion.

According to a preferred embodiment, a data block of datasets of the second data type can be deleted depending on a consensus method performed by all parties involved in the respective use case.

Preferably, a data block of the second data type can only be deleted if all or a majority of involved parties/stakeholders agreed on deletion.

According to a further embodiment, iteratively the latest data block of datasets of the second data type related to a specific use-case can be deleted in each case.

Therefore, a successive deletion process can be performed, wherein the latest data block is deleted until no data block assigned to a specific use-case remains. The iterative data deletion can for example be controlled using a look-up table.

According to a further embodiment, a data block of datasets of the third data type can be deleted depending on the respective data block storage time.

According to a further embodiment, the data block of datasets of the third data type can be deleted if remaining data block storage time is less or equal to zero.

According to a further embodiment, the previous method steps can be triggered by an event, at a specified point in time and/or by exceeding a given threshold value of consumed storage and/or of computational resources.

Hence, the data retention protocol can be triggered automatically and/or manually.

Another aspect of the invention relates to a data retention system for a decentralized distributed database comprising:
- a first interface which is configured to receive datasets, wherein a data type is assigned to each dataset, and to receive at least one predefined data retention rule,
- a sorting module which is configured to sort and link together the datasets depending on the respective assigned data type,
- a storage module which is configured to store datasets of the same data type into separate data blocks in the decentralized distributed database, wherein each data block comprises metadata based on the data type of the therein stored datasets,
- a evaluation module configured to check the metadata of a respective block against the data retention rule and to output a check result,
   and
- a data management module which is configured to retain or delete the respective data block depending on the check result.

The data retention system can preferably be implemented by means of a network application and/or as part of the decentralized distributed database (system) and/or in a blockchain. A "module" can be understood to mean for example a processor and/or a memory unit for storing and/or executing program instructions. In particular, the modules of the data retention system can be implemented in software and/or hardware. The modules can either be implemented on at least one node and/or on all nodes and/or distributed over the network.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
- Fig. 1:: shows a first exemplary embodiment of the invention;
- Fig. 2:: shows a second exemplary embodiment of the invention; and
- Fig. 3:: shows a third exemplary embodiment of the invention.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

In particular, in view of the high number of different realization options, it is impossible and also not helpful or necessary for the understanding of embodiments of the invention to name all these realization options. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

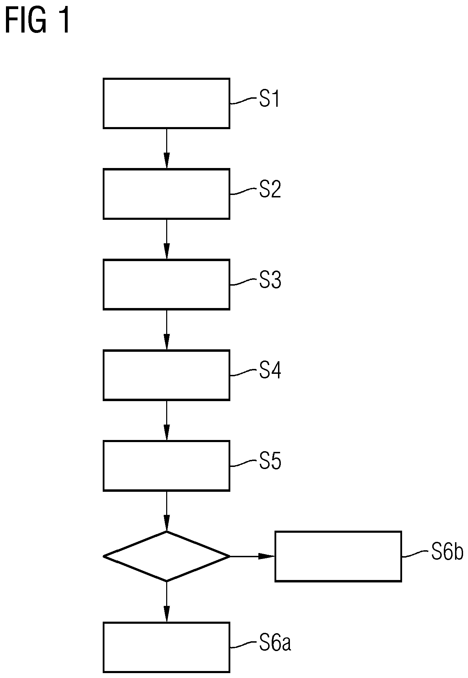

Figure 1 shows a first exemplary embodiment of the invention. It shows a flow chart illustrating a computer-implemented method for data retention in a decentralized distributed database, e.g., a blockchain, comprising the following method steps. The following method steps are performed by all nodes of the distributed database. In other words, the steps are performed across all nodes, because the data are stored across all nodes.

In the first step S1 datasets are received by the nodes of the distributed database. Datasets can for example be received as transactions. Data can be for example control data, transaction data, application data, etc. A data type is assigned to each dataset, i.e., a dataset is characterized by a respective data type.

A data type can be one of the following:
- a first data type defining a dataset which has unlimited storage time, i.e., data which need to persist on the database,
- a second data type defining a dataset which is assigned to a specific use case, wherein a use case specific condition for data retention is assigned to the use case,
   or
- a third data type defining a dataset which has a predefined storage time.

A dataset of the second data type can in particular have at least one further label/classifier assigned to it, wherein the label/classifier can refer to the specific use case, such that sorting the datasets by the respective use-case can be performed.

In the next step S2 at least one predefined data retention rule is received, wherein the data retention rule comprises at least one condition for retaining or deleting a data block. A data retention rule can for example be stored in the distributed database.

In the next step S3, the received datasets are sorted and linked together depending on the respective assigned data type. Hence, this results in groups of datasets of the same data type.

In the next step S4, the datasets of the same data type are stored into a data block in the decentralized distributed database. In other words, a new data block is inserted into the distributed database, wherein the data block comprises only datasets of the same data type. The data block insertion is performed for each group of data of a respective data type.

Each data block comprises metadata, i.e. information, about the datasets stored therein. The metadata are hence based on the data type of the therein stored datasets. The metadata can be stored as or in a data block header. The metadata/data block header comprises at least a block storage time depending on the data type of datasets stored in the respective data block. Furthermore, the metadata comprise a hash of previous block and a pointer to the previous block.

In particular, the metadata/the data block header comprises the hash of the previous data block, which is not modified when a data block is later deleted. When a data block is later deleted, only the pointer of the block, which comes after the deleted block, is updated in order to refer to the previous undeleted block. In that way, the hashes can still represent the whole blockchain in hashed form, but a data block/data can be deleted, reducing storage requirements.

A data type of a dataset and/or the metadata of a data block can be defined by a program code, e.g. a smart contract, generating this dataset. Hence, when generating the data, the metadata are automatically assigned to the data.

Datasets of the third data type can for example be sorted, linked together and stored into a data block depending on their storage time, wherein their average storage time is stored as the data block storage time for this data block. Preferably only datasets with a similar storage time are grouped together.

Alternatively, or in addition, the datasets of the third data type can be sorted, linked together and stored into a data block by means of a clustering algorithm or by means of a machine learning algorithm.

In the next step S5, if data retention management is triggered, the metadata of a respective bock is checked against the data retention rule and a check result is outputted. The check can for example comprise a comparison, e.g., checking whether an information in the header/metadata of data block meets a predefined condition. The data retention management can for example be triggered by an event, at a specified point in time and/or by exceeding a given threshold value of consumed storage and/or of computational resources.

Depending on the check result, the respective data block is retained in the distributed database, S6a, or deleted, S6b. If a data block is deleted, the pointers of the remaining blocks are rearranged. Hence, the metadata/headers of the remaining data blocks are updated, wherein the hash value remains unchanged. For example, if a data block "T" is deleted, a reference/pointer for data block "T+1" is rearranged to refer to "T-1" after deletion of data block "T".

For example, the data retention rule can specify that a data block of datasets of the third data type can be deleted from the distributed database when a specified data block storage time has expired. Hence, it is checked whether a data block meets a specified condition. If it meets the condition the data block is deleted, S6b, if not, it is retained, S6a. The data of the data block can hence be deleted from the distributed database. However, the information about the deleted data block, namely the hash value of said data block, remains unchanged, e.g., for later audits.

A priority list/queue of data blocks of the third data type can be maintained to sort the data blocks according to their block storage time. Such a list can be a data structure storing information about data blocks of datasets of the third data type. Thus, checking against the data retention rule then can comprise checking this list for data blocks which can be deleted.

For example, a data retention rule can also specify that a data block of datasets of the first data type is never deleted. A data block of datasets of the first data type is therefore indefinitely retained in the decentralized distributed database.

For example, a data block of datasets of the second data type can be deleted depending on the respective data block storage time and/or depending on the respective use-case specific condition. Data block deletion for the second data type can in particular be based on a consensus method performed by the parties involved in the use case. For example, only parties/stakeholders contributing and/or processing data of a specific use-case can determine whether data are deleted or retained.

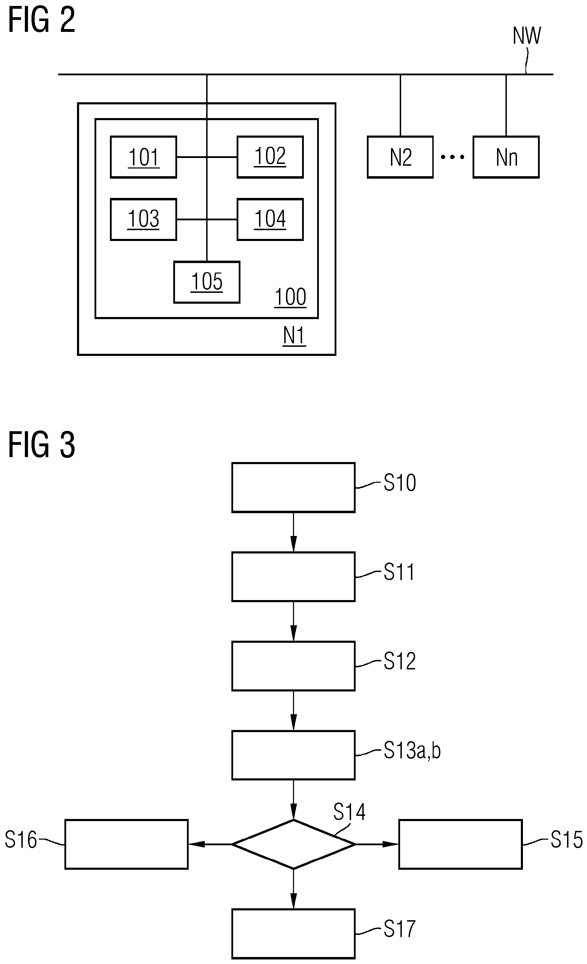

Figure 2 shows a block diagram of an embodiment of a data retention system 100 for a decentralized distributed database according to the invention.

It shows a network NW of nodes N1, ..., Nn which realize a decentralized distributed database. Each node can for example comprise a data retention system. Alternatively (not shown), the data retention system or its modules can be implemented in the distributed database.

The data retention system 100 comprises a first interface 101 which is configured to receive datasets/transactions, wherein a data type is assigned to each dataset/transaction, and to receive at least one predefined data retention rule.

The data retention system 100 comprises a sorting module 102 which is configured to sort and link together the datasets/transactions depending on the respective assigned data type.

The data retention system 100 comprises a storage module 103 which is configured to insert datasets/transactions of the same data type into separate data blocks in the decentralized distributed database. The data blocks are concatenated to previous data blocks of the distributed database. Each data block comprises metadata based on the data type of the therein stored datasets/transactions. Furthermore, the metadata comprise the hash value of a previous data block.

The data retention system 100 comprises an evaluation module 104 configured to check the metadata of a respective block against the at least one data retention rule and to output a check result. In case of data blocks storing datasets of a second data type, data retention management requires a consensus of all parties/nodes involved in the respective use-case. Thus, the evaluation module can be further configured to perform a consensus method, i.e., to come to an agreement regarding the data retention or deletion with the other involved nodes/parties and outputting a coordinated check result. This can involve for example data exchange among the nodes involved in the respective use-case.

The data retention system 100 comprises a data management module 105 which is configured to retain or delete the respective data block depending on the check result. The data management module 105 can for example further comprise a receiver, which is configured to receive the coordinated check result.

Figure 3 shows another exemplary embodiment of invention. It shows another flow chart illustrating a computer-implemented method for data retention in a blockchain.

At the start of the network, genesis data is copied across all blockchain nodes. Each transaction/dataset is generated by a smart contract. Data/transaction can have three different lifecycles defined by data types: a first data type characterizing transactions with unlimited lifetime/storage, a second data type characterizing transactions related to a use case, wherein the use case can be deleted at some point, and a third data type characterizing transactions which form a data relay, i.e., a use case persists, but the data, which is older than a certain amount of time, can be deleted. Transactions of the third type can have different lifecycles based on specific use case requirements. For example, smart contracts which implement a specific use case can have an annotation defining the life of the data/transaction. The three lifecycles are defined in the smart contract using the annotations.

Transactions can be stored in a data block. Every data block has a header with metadata. The header comprises a hash of the previous block, a pointer to the previous block, and a time definition of the block's lifetime, i.e. a header element defining the block storage time of the block.

The newly generated transactions are grouped S10 into groups of transactions according to their data type. Grouping of transactions can for example be performed at a predefined time or in regular time intervals.

For all transactions of the first data type a new data block is created S11 with the data block storage time set to infinite (stored in the header). All the proposed valid transactions of the first data type are added to this block and this block becomes the next block in the blockchain, i.e., the new block is concatenated to the blockchain.

For all transactions of the second data type, the transactions are grouped together in separate data blocks for each use case and inserted into the distributed database S12. If a transaction of the second data type is the first of its use case, a data block is created and the pointer to the block is stored in a lookup table and is mapped against the smart contract which generated the block. A lookup table is a data structure for storing information about data blocks, e.g., block identifiers or pointers. If the transaction of the second data type is not the first one, previous transactions of the second data type exists for this use case. Then, its reference can be found in the lookup table and a new block is created and the reference to the previous data block for said use case is added to the header of the block.

For all transactions of the third data type an averaged storage time of all storage times of said transactions is determined. All of these transactions which have a storage time less than or equal to the averaged storage time are grouped together in one block and inserted into the distributed database S13a. This data block has the average storage time as block storage time stored in the header.

The remaining transactions of the third data type are grouped together in another block with a block storage time set to the highest storage time among the proposed transactions and inserted into the distributed database S13b.

For the blocks storing the transactions of the third data type, a priority queue/list can be maintained. A priority queue/list can be a data structure storing information about the transactions of the third data type, e.g., the respective maximum storage time of each transaction. The priority can hence be defined by the lifecycle of the block. Every time a new block with transactions of the third data type is created, the time after which the block will be ready to be deleted is calculated based on the block storage time. Afterwards the pointer to the block is inserted into the priority queue, sorted by the remaining time.

Data retention management for the blockchain can be triggered S14 based by an event, at a specified point in time and/or by exceeding a given threshold value of consumed storage and/or of computational resources, and can involve the following steps:
For data blocks of transactions of the third data type the priority queue is observed. If the specified remaining time is less than or equal to zero, the pointers to the blocks are selected from the queue and the corresponding data blocks are then deleted from the blockchain, S15. Afterwards the pointers of the remaining blocks are rearranged.

If the deleted block was not the latest in the chain, the header of the block succeeding the deleted is updated, specifically the field that references to the "previous block".

For the data blocks of transactions of the second type, all stakeholders of the use case vote for the deletion or retention of the use-case specific data blocks, S16. If the consensus is reached, the most recent block is selected using the lookup table and the corresponding block is deleted. Afterwards, the previous block from the header of the deleted block is selected for deletion. This process is iteratively repeated until the header of a block does not refer to any older blocks of said use case. Alternatively, deletion can be performed for all selected blocks, expect the first one for said use case, at a later stage, e.g., when the computing and reading/writing resource usage is low. If the consensus is not reached, the block is not deleted, S17.

When a data block is selected to be deleted, the reference in the header of the subsequent block is updated.

An exemplary use-case is related to IoT devices in a factory floor. In most cases, these devices frequently generate a high volume of data, while most data can only be required for a short period of time. Even if needed for an audit, this data has a lifespan of few audits. Beyond that, the data can be effectively discarded or moved to a cheaper storage. However, it can be favorable to store specific information about the data immutably in a blockchain. The proposed invention enables to make this process possible. The data are stored in the blockchain and can be marked for "deletion" with a specific time period attached to it. Once that time period is over, it can be successfully removed from the blockchain with ease. This leads to a controlled (storage) size of the chain. On the other hand, the hash of the data always remains on-chain, so from a compliance perspective, the data owner can move the data to a cheaper off-chain storage and work with a smaller blockchain size. In particular in case of a blockchain with multiple stakeholders, if all can remove nonspecific, non-required data, the size of blockchain can be considerably reduced and be much easier maintained.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for data retention in a decentralized distributed database, comprising the steps:
- receiving (S1) datasets, wherein a data type is assigned to each dataset,
- receiving (S2) at least one predefined data retention rule, wherein the data retention rule comprises at least one condition for retaining or deleting a data block,
- sorting and linking together (S3) the datasets depending on the respective assigned data type,
- storing (S4) datasets of the same data type into separate data blocks in the decentralized distributed database, wherein each data block comprises metadata based on the data type of the therein stored datasets,
- checking (S5) the metadata of a respective block against the data retention rule and outputting a check result,
and
- retaining (S6a) or deleting (S6b) the respective data block depending on the check result.

2. Computer-implemented method according to claim 1, wherein the data type is one of the following:
- a first data type defining a dataset which has unlimited storage time,
- a second data type defining a dataset which is assigned to a specific use case, wherein a use case specific condition for data retention is assigned to the use case,
or
- a third data type defining a dataset which has a predefined storage time.

3. Computer-implemented method according to one of the preceding claims, wherein the metadata comprise a block storage time depending on the data type of datasets stored in the respective data block.

4. Computer-implemented method according to one of the preceding claims, wherein a data type of a dataset and/or the metadata of a data block are defined by a program code generating the dataset.

5. Computer-implemented method according to one of the preceding claims, wherein datasets of the third data type are further sorted, linked together and stored into a data block depending on their storage time, wherein their average storage time is stored as the data block storage time for this data block.

6. Computer-implemented method according to one of the preceding claims, wherein datasets of the third data type are further sorted, linked together and stored into a data block by means of a clustering algorithm or by means of a machine learning algorithm.

7. Computer-implemented method according to one of the preceding claims, wherein a data block of datasets of the first data type is indefinitely retained in the decentralized distributed database.

8. Computer-implemented method according to one of the preceding claims, wherein a data block of datasets of the second data type is deleted depending on the respective data block storage time and/or depending on the respective use-case specific condition.

9. Computer-implemented method according to one of the preceding claims, wherein a data block of datasets of the second data type is deleted depending on a consensus method performed by all parties involved in the respective use case.

10. Computer-implemented method according to claim 8 or 9, wherein iteratively the latest data block of datasets of the second data type related to a specific use-case is deleted in each case.

11. Computer-implemented method according to one of the preceding claims, wherein a data block of datasets of the third data type is deleted depending on the respective data block storage time.

12. Computer-implemented method according to claim 11, wherein the data block is deleted if remaining data block storage time is less or equal to zero.

13. Computer-implemented method according to one of the preceding claims, wherein the previous method steps are triggered by an event, at a specified point in time and/or by exceeding a given threshold value of consumed storage and/or of computational resources.

14. Data retention system (100) for a decentralized distributed database comprising:
- a first interface (101) which is configured to receive datasets, wherein a data type is assigned to each dataset, and to receive at least one predefined data retention rule,
- a sorting module (102) which is configured to sort and link together the datasets depending on the respective assigned data type,
- a storage module (103) which is configured to store datasets of the same data type into separate data blocks in the decentralized distributed database, wherein each data block comprises metadata based on the data type of the therein stored datasets,
- a evaluation module (104) configured to check the metadata of a respective block against the data retention rule and to output a check result,
and
- a data management module (105) which is configured to retain or delete the respective data block depending on the check result.

15. Computer program product directly loadable into the internal memory of a digital computer, comprising software code portions for performing the method steps of one of the claims 1 to 13 when said computer program product is run on a computer.
